# EUROPEAN PATENT APPLICATION

(11) **EP 4 485 897 A1**
(43) Date of publication of application: **01.01.2025**
(21) Application number: 22928646.3
(22) Date of filing: 25.02.2022
(51) Int. Cl.: H04L 51/10, H04L 51/212, H04L 51/52

(54) **INFORMATION PROCESSING TERMINAL, INFORMATION PROCESSING METHOD, AND INFORMATION PROCESSING PROGRAM**

(71) Applicant: Bsize Inc., Yokohama-shi, Kanagawa, 222-0033 (JP)
(72) Inventor: YAGI, Keita, Yokohama-shi, Kanagawa 222-0033 (JP)
(74) Representative: EIP
(86) International application number: PCT/JP2022/007830
(87) International publication number: WO 2023/162119

(57) **Abstract**

To provide an information processing terminal, an information processing method, and an information processing program highly convenient in contribution.

An information processing terminal including a first acquirer that acquires first designation information for designating voice data to be contributed from one or more voice data, and a contributor that contributes the voice data designated by the first designation information acquired by the first acquirer.

## Description

### Technical Field

The present invention relates to an information processing terminal, an information processing method, and an information processing program capable of contributing data.

### Background Art

A social networking service (SNS) has been widely spread, and not only character data but also image data, moving image data, voice data and the like can be contributed with enrichment of contents.

For example, Patent Literature 1 discloses an information processing system in which, when the voice data is contributed to the SNS, a call between users is recorded, and recorded call data is contributed to the SNS, so that a third user who is not participating in the call can listen to a call content between the users.

### Citation List

### Patent Literature

Patent Literature 1: Japanese Patent No. 6455848

### Summary of Invention

### Technical Problem

However, in the conventional information processing system, there is still room for improvement in convenience of data contribution.

The present invention has been made in view of the above-described problem, and an object thereof is to provide an information processing terminal, an information processing method, and an information processing program highly convenient in data contribution.

### Solution to Problem

In order to solve the above-described problem, an information processing terminal according to the present invention includes a first acquirer that acquires first designation information for designating voice data to be contributed from one or more voice data, and a contributor that contributes the voice data designated by the first designation information acquired by the first acquirer.

### Advantageous Effects of Invention

According to the present invention, it is possible to provide an information processing terminal, an information processing method, and an information processing program highly convenient in contribution.

### Brief Description of Drawings

Fig. 1 is a diagram illustrating an example of arrangement of an information processing system according to an embodiment.
Fig. 2 is a diagram illustrating an example of a configuration of an information processing server according to the embodiment.
Fig. 3 is a diagram illustrating an example of the configuration of the information processing device server according to the embodiment.
Fig. 4 is a diagram illustrating an example of a configuration of a first user terminal according to the embodiment.
Fig. 5 is a diagram illustrating an example of the configuration of the first user terminal according to the embodiment.
Fig. 6 is a diagram illustrating an example of a configuration of a second user terminal according to the embodiment.
Fig. 7 is a diagram illustrating an example of the configuration of the second user terminal according to the embodiment.
Fig. 8 is a view illustrating an example of a screen displayed on a display device of the first user terminal according to the embodiment.
Fig. 9 is a flowchart illustrating an example of processing by the information processing system according to the embodiment.
Fig. 10 is a flowchart illustrating an example of processing by the information processing system according to the embodiment.
Fig. 11 is a flowchart illustrating an example of processing by the information processing system according to the embodiment.
Fig. 12 is a flowchart illustrating an example of processing by the information processing system according to the embodiment.
Fig. 13 is a flowchart illustrating an example of processing by the information processing system according to the embodiment.

### Description of Embodiments

### [Embodiment]

Hereinafter, an information processing system 1 according to an embodiment will be described with reference to the drawings.

The information processing system 1 according to the embodiment is a so-called monitoring system, in which, from information uploaded from a second user terminal 4 usable while being carried, which is carried by a watched person (for example, a child), to a server 2 at constant intervals such as every 1.5 minutes, for example, a position of the second user terminal 4 is determined, and the determined position is reported from the server 2 to a first user terminal 3 carried or used by a watching person (for example, a family member such as parents or grandparents). The information processing system 1 according to this embodiment includes a microphone and a speaker in the first user terminal 3 and the second user terminal 4, and is configured to be able to transmit and receive voice messages (hereinafter, also referred to as voice) to and from each other. That is, it is configured in such a manner that messages can be exchanged between the watching person and the watched person by voice. The watching person can select any message from a conversation with the watched person and contribute the message to an SNS and the like. Note that, in the following description, the watching person is also referred to as a first user. The watched person is also referred to as a second user.

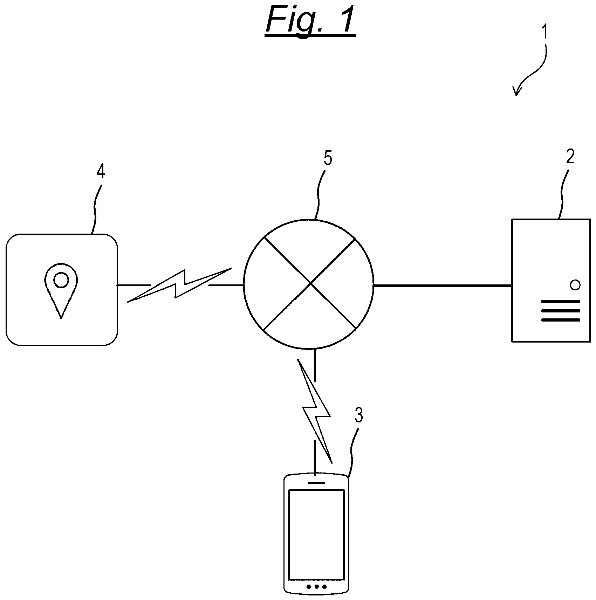

As illustrated in Fig. 1, the information processing system 1 includes the server 2, and one or more first user terminals 3 and second user terminals 4 connected to the server 2 via a network 5. The first user terminal 3 is configured to be able to contribute data such as voice data, character data, image data, moving image data (note that, in the following description, at least one of the image data and the moving image data is also referred to as image data and the like), position data, and time data on an external SNS server (not illustrated) via the network 5. In the example illustrated in Fig. 1, the information processing system 1 includes one server 2, one first user terminal 3, and one second user terminal 4, but the number of servers 2, first user terminals 3, and second user terminals 4 included in the information processing system 1 are optional.

### (Server 2)

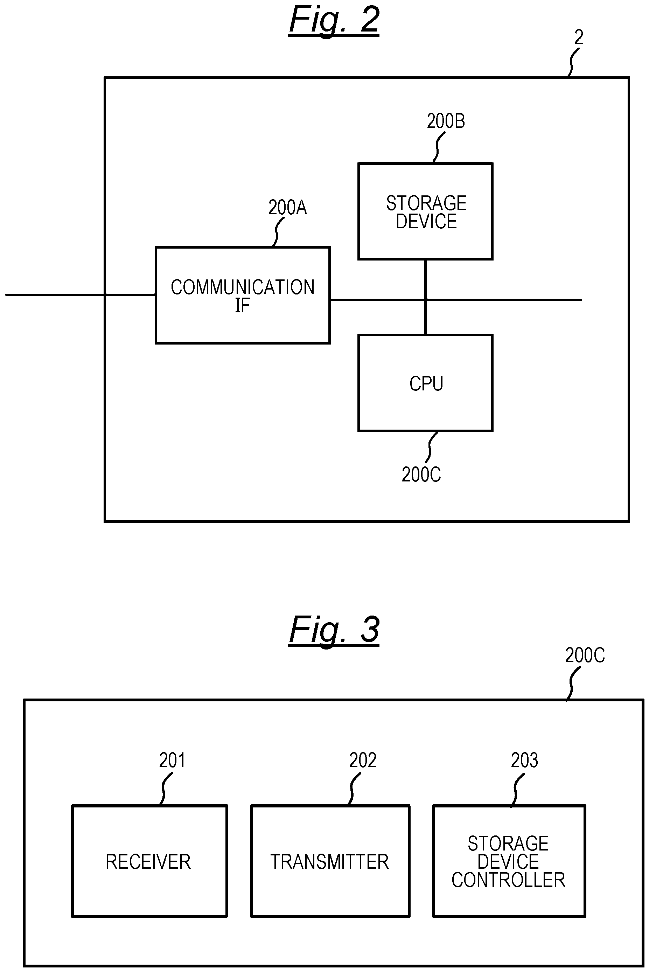

Figs. 2 and 3 are configuration diagrams of the server 2. Fig. 2 illustrates a principal hardware configuration of the server 2, and the server 2 includes a communication IF 200A, a storage device 200B, a CPU 200C and the like. Note that, although not illustrated in Fig. 2, the server 2 may include an input device (for example, a mouse, a keyboard, a touch panel and the like), a display device (cathode ray tube (CRT), a liquid crystal display, an organic EL display and the like) and the like.

The communication IF 200A is an interface for communicating with other devices (for example, the first user terminal 3, the second user terminal 4 and the like).

The storage device 200B is, for example, a hard disk drive (HDD) or a semiconductor storage device (solid state drive (SSD)). Various data and information processing programs are stored in the storage device 200B. Note that, some or all of the various data stored in the storage device 200B may be stored in an external storage device such as a universal serial bus (USB) memory or an external HDD or a storage device of another information processing device connected via the network 5. In this case, the server 2 refers to or acquires various data stored in the external storage device or the storage device of another information processing device.

The storage device 200B stores account information of the first user terminal 3, for example, an identification number of the first user terminal 3, a name, a contact address (e-mail address, telephone number), and an identification number of the second user terminal 4 possessed by the second user (for example, the user's own child). Account information of the second user terminal 4, for example, the identification number of the second user terminal 4, a name, and the identification number of the first user terminal 3 possessed by the first user (for example, a family member such as the user's own parents or grandparents) are stored in the storage device 200B. In the storage device 200B, a log and the like including data transmitted and received by the first user terminal 3 and the second user terminal 4 is stored in association with an account.

The CPU 200C controls the server 2 according to this embodiment, and includes a ROM, a RAM and the like not illustrated.

Fig. 3 is a functional block diagram of the server 2. As illustrated in Fig. 3, the server 2 has functions of a receiver 201, a transmitter 202, a storage device controller 203 and the like. Note that, the functions illustrated in Fig. 3 are implemented by the CPU 200C executing the information processing program stored in the storage device 200B.

The receiver 201 receives data transmitted from the first user terminal 3 or the second user terminal 4, for example, voice data and the like.

The transmitter 202 transmits the data received from the first user terminal 3, for example, the voice data to the second user terminal 4. The transmitter 202 transmits data received from the second user terminal 4, for example, the voice data to the first user terminal 3.

The storage device controller 203 stores the data transmitted and received by the first user terminal 3 and the second user terminal 4 in the storage device 200B in association with the identification number of the account or the user terminal that transmits and receives the data.

### (First User Terminal 3)

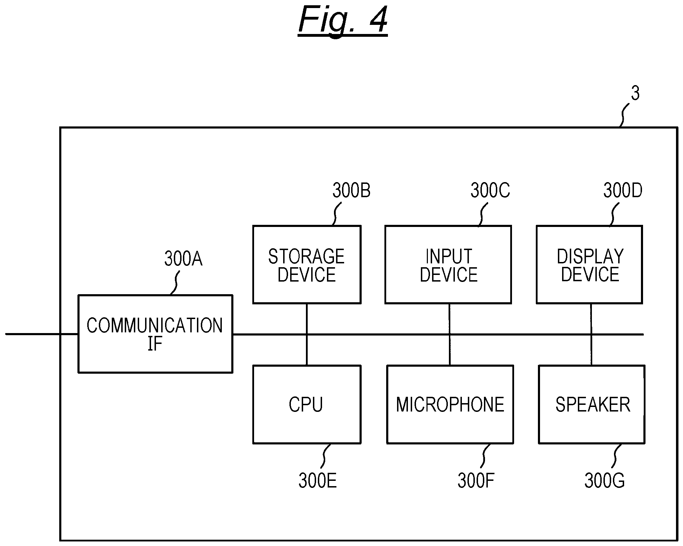

The first user terminal 3 is the terminal possessed by the first user, and is, for example, a smartphone and the like in which application software for allowing the first user terminal 3 to function as a terminal having each function described in this embodiment is installed. The first user can communicate by voice with the second user (for example, the user's own child) by transmitting and receiving the voice data to and from the second user terminal 4 registered by using the first user terminal 3. Fig. 4 illustrates a principal hardware configuration of the first user terminal 3, and includes a communication IF 300A, a storage device 300B, an input device 300C, a display device 300D, a CPU 300E, a microphone 300F, a speaker 300G and the like.

The communication IF 300A is an interface for communicating with other devices (in this embodiment, the server 2).

The storage device 300B is, for example, a hard disk drive (HDD) or a semiconductor storage device (solid state drive (SSD)). The storage device 300B stores the identification number of the terminal, the information processing program (application software), a dictionary in which a word of which contribution is forbidden is registered and the like. Data transmitted and received between the first user terminal 3 and the second user terminal 4 is stored in the storage device 300B. For example, the storage device 300B stores the voice data transmitted and received between the first user terminal 3 and the second user terminal 4 and character data obtained by converting the voice data to a character in association with each other. The identification number of the terminal is a number for identifying the first user terminal 3. By assigning the identification number of the terminal to the data transmitted from the first user terminal 3, the server 2 can determine from which first user terminal 3 the received data is transmitted. Note that, an internet protocol (IP) address, a media access control (MAC) address and the like may be used as the identification number of the terminal, and the server 2 may assign the same to the first user terminal 3.

The input device 300C is, for example, an input device such as a keyboard, a mouse, or a touch panel, but may be another device or equipment as long as this can input. A voice input device may be used.

The display device 300D is, for example, a liquid crystal display, a plasma display, an organic EL display and the like, but may be another device or equipment (for example, a cathode ray tube (CRT)) as long as this can display.

The CPU 300E controls the first user terminal 3 according to this embodiment, and includes a ROM, a RAM and the like not illustrated.

The microphone 300F is an acoustic device that converts sound to an electric signal. The user of the first user terminal 3 can input voice using the microphone 300F. The inputted voice is transmitted to the server 2 by a transmitter 302 to be described later.

The speaker 300G is an acoustic device that converts an electric signal to sound. The speaker 300G reproduces, for example, the voice data transmitted from the second user terminal 4 via the server 2 and stored in the storage device 300B.

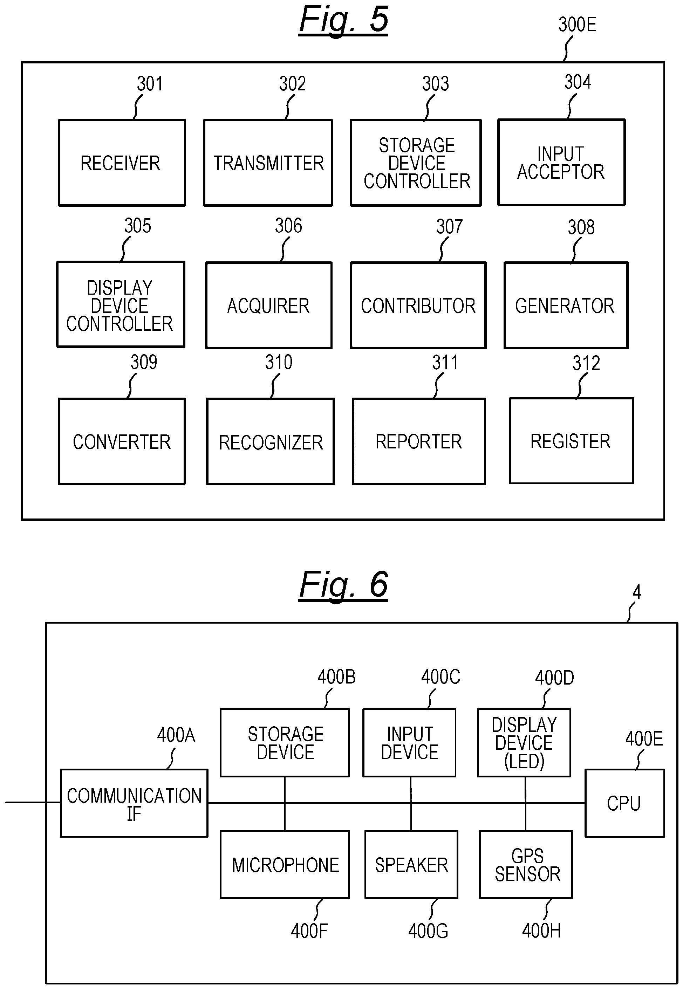

Fig. 5 illustrates a functional block diagram of the first user terminal 3, and the first user terminal 3 has functions of a receiver 301, a transmitter 302, a storage device controller 303, an input acceptor 304 (acceptor), a display device controller 305, an acquirer 306 (first to third acquirers), a contributor 307, a generator 308, a converter 309, a recognizer 310, a reporter 311, a register 312 and the like. Note that, the functions illustrated in Fig. 5 are implemented by the CPU 300E executing the information processing program stored in the storage device 300B.

The receiver 301 receives, for example, data transmitted from the server 2.

For example, the transmitter 302 transmits data to the server 2 according to an input operation accepted by the input acceptor 304.

The storage device controller 303 controls the storage device 300B. For example, the storage device controller 303 stores the data transmitted and received by the first user terminal 3 and the second user terminal 4 in the storage device 300B in association with the identification number of the account or the user terminal that transmits and receives the data. For example, the storage device controller 303 stores the voice data transmitted and received between the first user terminal 3 and the second user terminal 4 and the character data obtained by converting the voice data to a character to the storage device 300B in association with each other.

The input acceptor 304 accepts an input operation from the input device 300C. For example, the input acceptor 304 accepts selection as to whether or not the voice data reported by the reporter 311 can be contributed.

The display device controller 305 controls the display device 300D, and displays the data and the like received by the receiver 301 on the display device 300D.

The acquirer 306 acquires first designation information for designating voice data to be contributed from one or more voice data accepted by the input acceptor 304. Herein, the acquirer 306 may acquire information designating the character data in units of two or more sentences or in units of voice data. The acquirer 306 may acquire the first designation information on the basis of the character data converted by the converter 309. The acquirer 306 acquires second designation information for designating image data and the like (at least one of image data and moving image data) to be contributed. Herein, the image data and the like may be image data and the like automatically designated by the generator 308 of the first user terminal 3, or may be image data and the like designated by the user accepted by the input acceptor 304.

The contributor 307 contributes the voice data designated by the first designation information acquired by the acquirer 306 to the SNS and the like. The contributor 307 contributes reproduction data generated by the generator 308 to the SNS and the like. The contributor 307 may contribute the character data to the SNS and the like together with the voice data of which contribution is designated. Note that, the character data is data obtained by converting the voice data of which contribution is designated to a character. The contributor 307 may contribute information of a speaker of the voice data to the SNS and the like together with the voice data of which contribution is designated. The contributor 307 refers to the dictionary in which the word of which contribution is forbidden is registered, and restricts the contribution of the voice data including the word registered in the dictionary to the SNS and the like. The contributor 307 contributes the voice data reported by a reporter 311 to the SNS and the like on the basis of the selection as to whether or not the contribution is allowed, which is accepted by the input acceptor 304. Herein, the contribution refers to processing of uploading data to be contributed to a platform in which a third party terminal can browse or download the contributed data, such as the SNS or a website so that the third party terminal can browse or download the contributed data. Note that, the platform includes not only a platform that exchanges data and the like with terminals of a number of unspecified recipients but also a platform that serves as a communication tool between two parties such as exchange of data and the like with terminals of a number of specified recipients in which the number of unspecified recipients are limited or one single terminal. Processing of uploading data so that a single recipient can browse or download using the communication tool also corresponds to the contribution. A mode of contribution for the recipient terminal to browse or download the data is not limited to a case where a contributor uploads the data itself as already described, and alternatively includes a mode in which information for downloading the data, such as a URL link created by, for example, the terminal of the contributor or a server that receives the data for downloading from the terminal of the contributor, is transmitted to the recipient terminal. The recipient terminal can download data associated with the URL link and the like by selecting the URL link and the like.

The generator 308 generates the reproduction data to be reproduced by combining the voice data designated by the first designation information acquired by the acquirer 306, and the image data and the like. As described above, the image data and the like may be the image data and the like automatically acquired by the generator 308 of the first user terminal 3, or may be the image data and the like designated by the user. Note that, as the reproduction data, the character data of the voice data converted by the speaker (recognized by the recognizer 310) or the converter 309 of the voice data being reproduced in accordance with reproduction of the voice data can be presented.

The converter 309 converts the voice data acquired by the acquirer 306 to the character data.

The recognizer 310 recognizes the speaker of the voice data. Here, the speaker of the voice data may be recognized from the identification number assigned to the voice data, or may be recognized by analyzing the voice data to extract a feature amount and comparing the feature amount with the feature amount of the voice of the speaker registered in advance.

The reporter 311 reports that the voice is received. This is reported, for example, by push notification (for example, a notification sound or a display on the display device 300D) by application software. The reporter 311 reports the presence of the voice data including the word registered in the dictionary. Contents of the report by the reporter 311 are displayed on the display device 300D by the display device controller 305. The contents of the report by the reporter 311 may be reported from the speaker 300G as voice.

The register 312 registers (stores) the word acquired by the acquirer 306 in the dictionary. The register 312 registers (stores) the word acquired by the acquirer 306 in the dictionary as a word to be excluded from words of which contribution is forbidden (word that can be contributed). The word registered in the dictionary by the register 312 is stored in the storage device 200B by the storage device controller 303.

### (Second User Terminal 4)

The second user terminal 4 is a terminal used by the second user of the information processing system 1. The second user can communicate by voice with the first user (for example, the user's own family) by transmitting and receiving the voice data to and from the first user terminal 3 registered by using the second user terminal 4. Fig. 6 illustrates a principal hardware configuration of the second user terminal 4, and the second user terminal 4 includes a communication IF 400A, a storage device 400B, an input device 400C, a display device 400D, a CPU 400E, a microphone 400F, a speaker 400G, a GPS sensor 400H and the like.

The communication IF 400A is an interface for communicating with other devices (in this embodiment, the server 2).

The storage device 400B is, for example, a hard disk drive (HDD) or a semiconductor storage device (solid state drive (SSD)). The storage device 400B stores the identification number of the terminal, the information processing program, the voice data transmitted from the first user terminal 3 and the like. The identification number of the terminal is a number for identifying the second user terminal 4. By assigning the identification number of the terminal to the data transmitted from the second user terminal 4, the server 2 can determine from which second user terminal 4 the received data is transmitted. Note that, an internet protocol (IP) address, a media access control (MAC) address and the like may be used as the identification number of the terminal, and the server 2 may assign the same to the second user terminal 4.

The input device 400C is, for example, an input device such as a keyboard, a mouse, or a touch panel, but may be another device or equipment as long as this can input. A voice input device may be used. The second user can operate the input device 400C to input voice and transmit the voice to the first user terminal 3 or reproduce the voice data transmitted from the first user terminal 3.

The display device 400D is, for example, an LED. The display device 400D reports that the voice is received by lighting or blinking in a predetermined pattern.

The CPU 400E controls the second user terminal 4 according to this embodiment, and includes a ROM, a RAM and the like not illustrated.

The microphone 400F is an acoustic device that converts sound to an electric signal. The user of the second user terminal 4 can input voice using the microphone 400F. The inputted voice is transmitted to the server 2 by a transmitter 402 to be described later.

The speaker 400G is an acoustic device that converts an electric signal to sound. The speaker 400G reproduces, for example, the voice data transmitted from the first user terminal 3 via the server 2 and stored in the storage device 400B. The speaker 400G reports that the voice is received by generating a sound in a predetermined pattern.

The GPS sensor 400H receives a signal including data of time of an atomic clock mounted on a satellite, data of the celestial calendar (orbit) of the satellite and the like from the GPS satellite, calculates a distance from the satellite on the basis of a difference between a transmission time and a reception time of the received signal, and specifies a current position. The GPS sensor 400H outputs the specified current position.

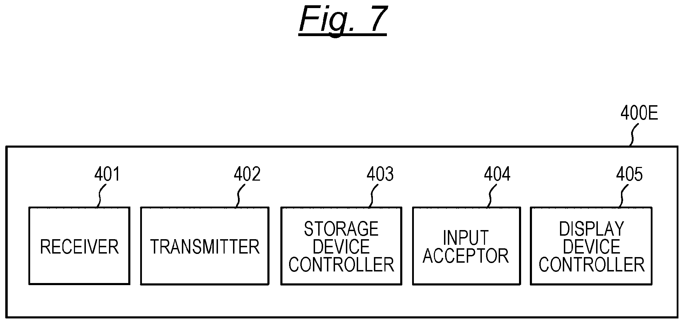

Fig. 7 illustrates a functional block diagram of the second user terminal 4, and the second user terminal 4 has functions of a receiver 401, a transmitter 402, a storage device controller 403, an input acceptor 404, a display device controller 405. Note that, the functions illustrated in Fig. 7 are implemented by the CPU 400E executing the information processing program stored in the storage device 400B.

The receiver 401 receives, for example, data transmitted from the server 2, for example, the voice data.

For example, the transmitter 402 transmits data, for example, the voice data to the server 2 according to an input operation accepted by the input acceptor 304.

The storage device controller 403 controls the storage device 400B. For example, the storage device controller 403 controls the storage device 400B to write and read data. The storage device controller 403 stores, for example, data received by the receiver 401 in the storage device 400B.

The input acceptor 404 accepts an input operation from the input device 400C. The input acceptor 404 accepts, for example, an operation of reproducing the voice data stored in the storage device 400B.

The display device controller 405 controls the display device 400D. For example, when the receiver 401 receives the voice data, the display device controller 405 allows the display device 400D (LED) to light or blink in a predetermined pattern and the like.

### (Display Screen)

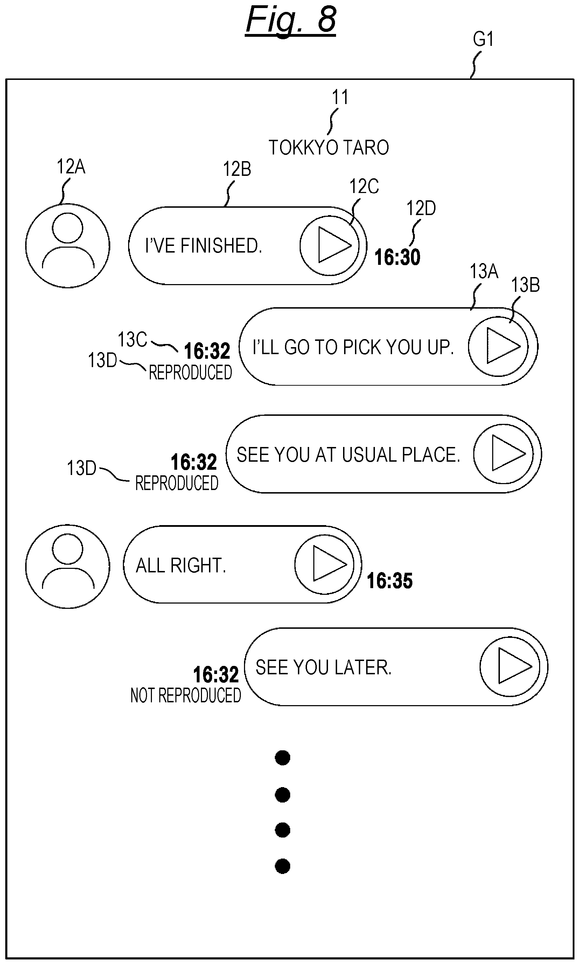

Fig. 8 is a diagram illustrating an example of a screen G1 displayed on the display device 300D of the first user terminal 3. Hereinafter, an example of the screen G1 displayed on the display device 300D of the first user terminal 3 is described with reference to Fig. 8. Note that, the same components as those described with reference to Figs. 1 to 7 are denoted by the same reference numerals, and redundant description will be omitted.

As illustrated in Fig. 8, the character data obtained by converting the voice data transmitted and received between the first user terminal 3 and the second user terminal 4 is displayed on the display device 300D in chronological order in units of files of the voice data (hereinafter, also referred to as timeline display).

In the example illustrated in Fig. 8, a name 11 (which may be a handle name) of the second user is displayed in an upper portion of the screen G1. On a left side of the screen G1, character data 12B obtained by converting the voice data (a voice file of the second user) transmitted from the second user terminal 4 is displayed together with a time 12D (using time stamp information) at which this is transmitted and an icon 12A. When a reproduction button 12C is selected, the voice data (voice file) corresponding to the displayed character data 12B is reproduced, and the voice can be listened to. On a right side of the screen G1, character data 13A obtained by converting the voice data (a voice file of the first user) transmitted from the first user terminal 3 is displayed together with a time 13C (using time stamp information) at which this is transmitted. A status 13D (for example, whether or not the second user terminal 4 reproduces the voice data and the like) is also written in each character data transmitted from the first user terminal 3. When a reproduction button 13B is selected, the voice data (voice file) corresponding to the displayed character data 13A is reproduced, and the voice can be listened to.

In a case of contributing the voice data to the SNS and the like, the first user designates the voice data to be contributed to the SNS and the like by designating the character data obtained by converting the voice data to be contributed by operating the input device 300C such as a touch panel. When the character data obtained by converting the voice data to be contributed is designated by operating the input device 300C such as the touch panel, the voice data before conversion is contributed to the SNS and the like by the contributor 307. Note that, the voice data may be designated for each file of the voice data, or files of a plurality of voice data may be collectively designated. In a case of collectively designating, it may be configured in such a manner that, when the first voice data and the last voice data are designated in the timeline illustrated in Fig. 8, the last voice data is designated from the first voice data including intermediate voice data.

Note that, in the example illustrated in Fig. 8, the character data obtained by converting the voice data is displayed in chronological order in units of files of the voice data, but it is possible that the character data 12B obtained by converting the voice data is not displayed. In this case, for example, the reproduction time of the voice data may be displayed instead of the character data 12B, but is not necessarily limited to this example.

### (Information Processing)

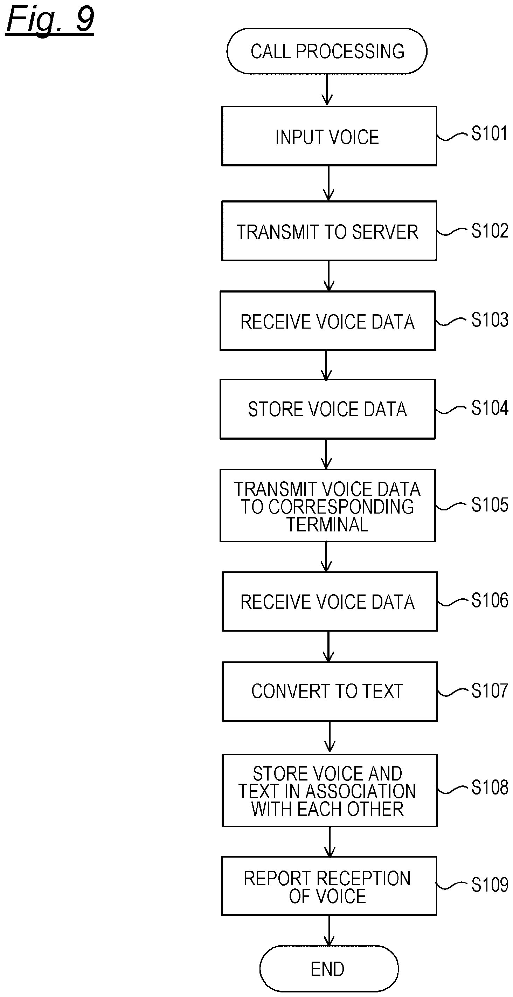

Figs. 9 to 13 are flowcharts illustrating an example of information processing of the information processing system 1. Hereinafter, the information processing of the information processing system 1 will be described with reference to Figs. 9 to 13. Note that, the same components as those described with reference to Figs. 1 to 8 are denoted by the same reference numerals, and redundant description will be omitted.

### (Call Processing)

Fig. 9 is a flowchart illustrating an example of call processing of the information processing system 1. Hereinafter, an example of the call processing of the information processing system 1 will be described with reference to Fig. 9. Note that, in Fig. 9, a case where the voice data is transmitted from the second user terminal 4 to the first user terminal 3 will be described.

### (Step S101)

The second user operates the input device 400C of the second user terminal 4 to input voice.

### (Step S102)

The inputted voice is converted to the electric signal by the microphone 400F and then transmitted as the voice data from the transmitter 402 to the server 2. Note that, data such as the identification number of the second user terminal 4 and a time stamp is assigned to the data transmitted from the second user terminal 4.

### (Step S103)

The receiver 201 of the server 2 receives the voice data transmitted from the second user terminal 4.

### (Step S104)

The storage device controller 203 stores the voice data transmitted by the second user terminal 4 in the storage device 200B in association with the identification number of the account or the user terminal that transmits and receives the data.

### (Step S105)

The transmitter 202 of the server 2 refers to the storage device 200B, specifies the identification number of the first user terminal 3 associated with the identification number assigned to the voice data received by the receiver 201, and transmits the voice data transmitted from the second user terminal 4 to the specified first user terminal 3.

### (Step S106)

The receiver 301 of the first user terminal 3 receives the voice data transmitted from the server 2.

### (Step S107)

The converter 309 of the first user terminal 3 converts the voice data received by the receiver 301 to the character data.

### (Step S108)

The storage device controller 303 of the first user terminal 3 stores the voice data received from the second user terminal 4 and the character data obtained by converting the voice data to a character in the storage device 300B in association with each other.

### (Step S109)

The reporter 311 of the first user terminal 3 reports that the voice is received.

### (Call Processing)

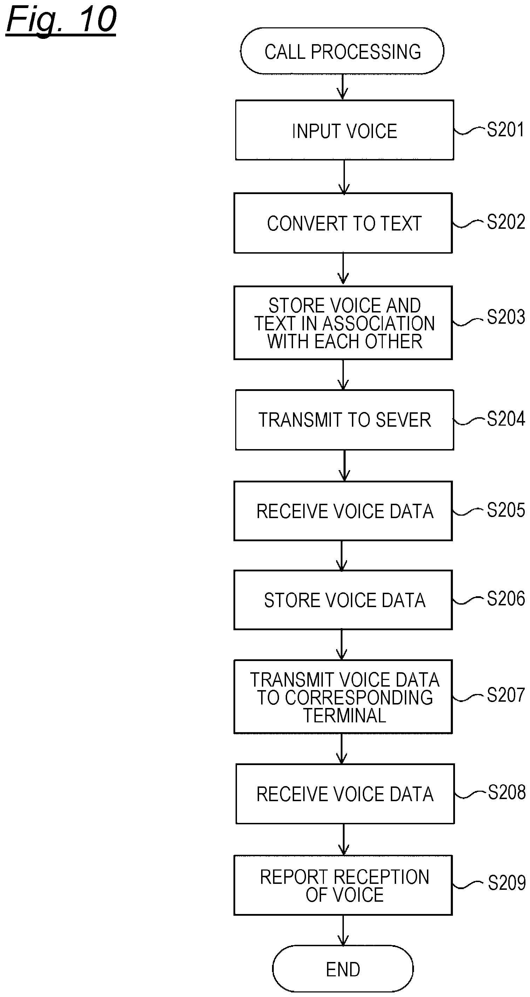

Fig. 10 is a flowchart illustrating an example of call processing of the information processing system 1. Hereinafter, an example of the call processing of the information processing system 1 will be described with reference to Fig. 10. Note that, in Fig. 10, a case where the voice data is transmitted from the first user terminal 3 to the second user terminal 4 will be described.

### (Step S201)

The first user operates the input device 300C of the first user terminal 3 to input voice. The inputted voice is converted to the electric signal by the microphone 400F.

### (Step S202)

The converter 309 of the first user terminal 3 converts the inputted voice data to the character data.

### (Step S203)

The storage device controller 303 of the first user terminal 3 stores the inputted voice data and the character data obtained by converting the voice data to a character in the storage device 300B in association with each other.

### (Step S204)

The transmitter 302 of the first user terminal 3 transmits the inputted voice data to the server 2. Note that, data such as the identification number of the first user terminal 3 and a time stamp is assigned to the data transmitted from the first user terminal 3.

### (Step S205)

The receiver 201 of the server 2 receives the voice data transmitted from the first user terminal 3.

### (Step S206)

The storage device controller 203 stores the voice data transmitted by the first user terminal 3 in the storage device 200B in association with the identification number of the account or the user terminal that transmits and receives the data.

### (Step S207)

The transmitter 202 of the server 2 refers to the storage device 200B, specifies the identification number of the second user terminal 4 associated with the identification number assigned to the voice data received by the receiver 201, and transmits the voice data transmitted from the first user terminal 3 to the specified second user terminal 4.

### (Step S208)

The receiver 401 of the second user terminal 4 receives the voice data transmitted from the server 2.

### (Step S209)

An LED of the second user terminal 4 reports that the voice is received by lighting of the LED or sound.

### (Contribution Processing)

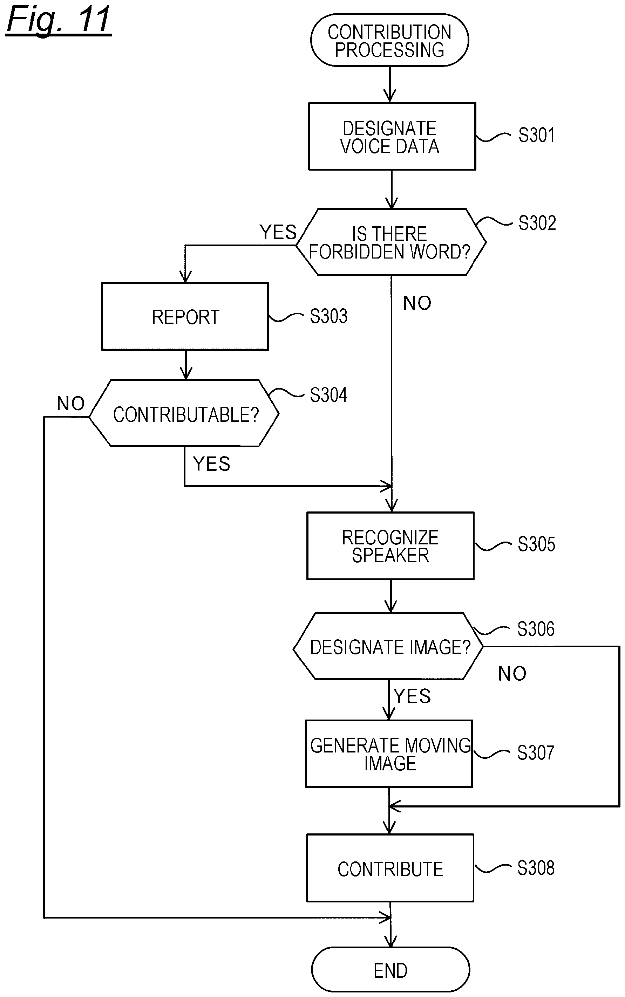

Fig. 11 is a flowchart illustrating an example of contribution processing of the information processing system 1. Hereinafter, an example of the contribution processing of the information processing system 1 will be described with reference to Fig. 11.

### (Step S301)

The first user operates the input device 300C of the first user terminal 3 to designate the voice data to be contributed to the SNS and the like. The voice data may be designated for each file of the voice data, or a plurality of files of voice data may be collectively or selectively designated. The acquirer 306 of the first user terminal 3 acquires the first designation information for designating the voice data to be contributed from one or more voice data accepted by the input acceptor 304.

Note that, in this embodiment, by designating the character data, corresponding voice data is contributed to the SNS and the like, but it may be configured that the voice data to be contributed to the SNS and the like is designated by directly designating the voice data (file of voice data).

### (Step S302)

The reporter 311 of the first user terminal 3 refers to the dictionary and determines whether or not a forbidden word is included in the voice data designated by the first designation information. The reporter 311 may analyze the voice data to determine whether or not the forbidden word is included, or may determine whether or not the forbidden word is included on the basis of the character data converted by the converter 309. In a case where the forbidden word is included in the voice data (YES), the first user terminal 3 executes processing at step S303. In a case where the forbidden word is not included in the voice data (NO), the first user terminal 3 executes processing at step S305.

### (Step S303)

The reporter 311 reports the presence of the voice data including the word registered in the dictionary. Contents of the report by the reporter 311 are displayed on the display device 300D by the display device controller 305. The contents of the report by the reporter 311 may be reported from the speaker 300G as voice.

### (Step S304)

The input acceptor 304 accepts selection as to whether or not the voice data reported by the reporter 311 can be contributed. In a case where selection that the contribution is possible is accepted (YES), the first user terminal 3 executes processing at step S305. In a case where the selection that the contribution is impossible is accepted (NO), the first user terminal 3 ends the processing (the first user starts again designating the voice data at step S301 or ends the contribution itself).

### (Step S305)

The recognizer 310 of the first user terminal 3 recognizes the speaker of the selected voice data. Here, the speaker of the voice data may be recognized from the identification number assigned to the voice data, or may be recognized by analyzing the voice data to extract a feature amount and comparing the feature amount with the feature amount of the voice of the speaker registered in advance.

### (Step S306)

The first user operates the input device 300C of the first user terminal 3 to designate the image data and the like to be contributed to the SNS and the like as necessary. In a case where the input acceptor 304 accepts the designation of the image data and the like (YES), the acquirer 306 of the first user terminal 3 acquires the second designation information for designating the image data and the like, and the first user terminal 3 executes the processing at step S307. Note that, as for the image data and the like, as described above, the generator 308 of the first user terminal 3 may automatically designate the image data and the like. In a case where the input acceptor 304 does not accept the designation of the image data and the like (NO), the first user terminal 3 executes processing at step S308. Note that, the first user may contribute only the voice data without performing the processing of designating the image data and the like at step S306.

### (Step S307)

The generator 308 of the first user terminal 3 generates the reproduction data to be reproduced by combining the voice data designated by the first designation information acquired by the acquirer 306, and the image data and the like. As described above, the image data and the like may be the image data and the like automatically acquired by the generator 308 of the first user terminal 3, or may be the image data and the like designated by the user.

### (Step S308)

In a case where the image data and the like is not designated (NO at step S306), the contributor 307 of the first user terminal 3 contributes the voice data designated by the first designation information acquired by the acquirer 306 to the SNS and the like. In a case where the image data and the like is designated (YES at step S306), the contributor 307 contributes the reproduction data generated by the generator 308 to the SNS and the like.

Note that, in the contribution processing exemplified in Fig. 1, when the voice data is contributed to the SNS and the like, the character data obtained by converting the voice data may be contributed together. When the voice data is contributed to the SNS and the like, characters, sentences, hash tags, URLs and the like that are not related to the character data obtained by converting the voice data inputted by the first user using the input device 300C may be contributed together.

### (Registration Processing)

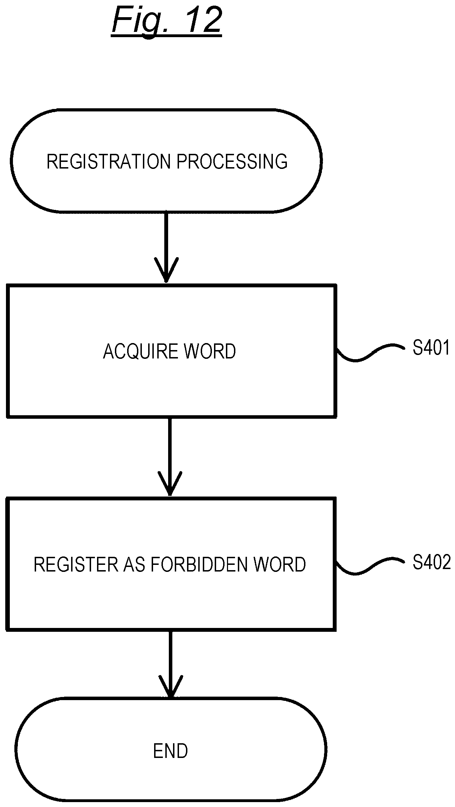

Fig. 12 is a flowchart illustrating an example of registration processing of the information processing system 1. Hereinafter, an example of the registration processing of the information processing system 1 will be described with reference to Fig. 12.

### (Step S401)

The first user operates the input device 300C of the first user terminal 3 to input the word of which contribution is forbidden. The acquirer 306 of the first user terminal 3 acquires a word accepted by the input acceptor 304.

### (Step S402)

The register 312 of the first user terminal 3 registers (stores) the word acquired by the acquirer 306 in the dictionary as the word of which contribution is forbidden. The word registered in the dictionary by the register 312 is stored in the storage device 200B by the storage device controller 303.

Note that, in the registration processing described with reference to Fig. 12, the first user operates the input device 300C of the first user terminal 3 to input the word of which contribution is forbidden, but the first user does not necessarily need to input the word. For example, the first user terminal 3 may be configured to automatically determine the word of which contribution is forbidden and register the word as the word of which contribution is forbidden, or to recommend the same to the first user as the word of which contribution is forbidden. In this case, for example, it may be configured in such a manner that the first user learns the word of which contribution is forbidden registered in the past, and the first user terminal 3 automatically determine the word of which contribution is forbidden on the basis of a learning result.

### (Exclusion Processing)

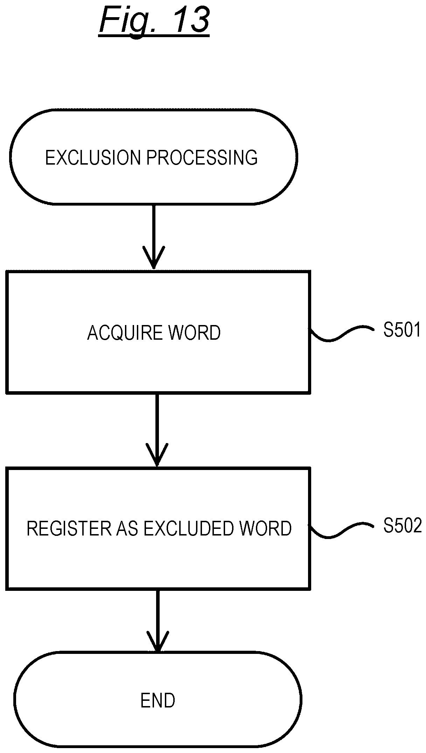

Fig. 13 is a flowchart illustrating an example of exclusion processing of the information processing system 1. Hereinafter, an example of the exclusion processing of the information processing system 1 will be described with reference to Fig. 13.

### (Step S501)

The first user operates the input device 300C of the first user terminal 3 to input a word excluded among the words of which contribution is forbidden. The acquirer 306 of the first user terminal 3 acquires a word accepted by the input acceptor 304.

### (Step S502)

The register 312 of the first user terminal 3 registers (stores) the word acquired by the acquirer 306 in the dictionary as the word to be excluded from the words of which contribution is forbidden (word that can be contributed). The word registered in the dictionary by the register 312 is stored in the storage device 200B by the storage device controller 303.

As described above, the first user terminal 3 (information processing terminal) according to the embodiment includes the acquirer 306 that acquires the first designation information for designating the voice data to be contributed from one or more voice data, and the contributor 307 that contributes the voice data designated by the first designation information acquired by the acquirer 306.

In this manner, it is possible to contribute to the SNS and the like while designating the voice data, so that it is highly convenient.

The first user terminal 3 according to this embodiment includes the generator 308 that generates the reproduction data to be reproduced by combining the voice data designated by the first designation information acquired by the acquirer 306, and the image data and the like. Then, the contributor 307 contributes the reproduction data generated by the generator 308.

In this manner, since the reproduction data can be generated by combining the voice data, and the image data and the like and can be contributed to the SNS and the like, convenience is improved.

The first user terminal 3 according to the embodiment includes the acquirer 306 that acquires the second designation information for designating the image data and the like to be contributed, and the generator 308 generates the reproduction data to be reproduced by combining the voice data designated by the first designation information acquired by the acquirer 306 and the image data and the like designated by the second designation information acquired by the acquirer 306.

In this manner, since the reproduction data can be generated by designating the image data and the like, convenience is improved.

The first user terminal 3 according to the embodiment includes the converter 309 that converts the voice data acquired by the acquirer 306 to the character data, and the acquirer 306 acquires the first designation information on the basis of the character data converted by the converter 309.

In this manner, since it is possible to designate the voice data to be contributed to the SNS and the like by looking at the character data obtained by converting the voice data to a character, it is possible to grasp the content to be contributed at a glance, and convenience is improved.

The acquirer 306 of the first user terminal 3 according to the embodiment acquires information for designating the character data in units of sentences or in units of voice data.

In this manner, since the voice data to be contributed to the SNS and the like can be designated in units of sentences or in units of voice data, convenience is improved.

The acquirer 306 of the first user terminal 3 according to the embodiment acquires the information for designating the character data in units of two or more sentences or in units of voice data.

In this manner, it is possible to collectively designate a plurality of voice data to be contributed to the SNS and the like, so that convenience is improved.

The contributor 307 of the first user terminal 3 according to the embodiment contributes the character data to the SNS and the like together with the voice data of which contribution is designated.

In this manner, since not only the voice data but also the character data can be contributed, convenience is improved.

The character data is the character data obtained by converting the voice data of which contribution to the SNS and the like is designated.

In this manner, it is possible to contribute the character data obtained by converting the voice data to the SNS and the like, so that convenience is improved.

The first user terminal 3 according to the embodiment includes the recognizer 310 that recognizes the speaker of the voice data, and the contributor 307 contributes information of the speaker of the voice data together with the voice data of which contribution is designated.

Therefore, it is possible to present who is speaking to the SNS and the like, and convenience is improved.

The contributor 307 of the first user terminal 3 according to the embodiment refers to the dictionary in which the word of which contribution is forbidden is registered, and restricts the contribution of the voice data including the word registered in the dictionary.

In this manner, since the contribution of the voice data including the word registered in advance (for example, word with which personal information can be specified such as a school name, a place name, and a name) on the SNS and the like is forbidden, convenience is improved.

The first user terminal 3 according to the embodiment includes the reporter 311 that reports presence of the voice data including the word registered in the dictionary.

In this manner, since the presence of the voice data including the word registered in advance (for example, word with which personal information can be specified such as a school name, a place name, and a name) is reported, convenience is improved.

The first user terminal 3 according to the embodiment includes the acceptor 304 that accepts the selection as to whether or not the voice data reported by the reporter 311 can be contributed. The contributor 307 contributes the voice data reported by the reporter 311 on the basis of the selection as to whether or not the contribution is allowed, which is accepted by the acceptor 304.

In this manner, in a case where there is the voice data including the word registered in the dictionary, it is possible to select whether or not to contribute the same to the SNS and the like, so that convenience is improved.

The first user terminal 3 according to the embodiment includes the acquirer 306 that acquires the word of which contribution is forbidden, and the register 312 that registers the word acquired by the acquirer 306 in the dictionary.

In this manner, it is possible to register the word of which contribution to the SNS and the like is forbidden, so that convenience is improved.

### [Modification of Embodiment]

Note that, in the embodiment described above, the server 2 may include at least some of the functions of the first user terminal 3 illustrated in Fig. 5. For example, the server 2 may have some or all of the functions of the acquirer 306 (first to third acquires), the generator 308, the converter 309, the recognizer 310, the reporter 311, the register 312 and the like among the functions of the first user terminal 3 illustrated in Fig. 5. In this case, for example, in the server 2, the processing at steps S301 to S307 described with reference to Fig. 11 is executed, and the voice data and the reproduction data are contributed to the SNS and the like by the contributor 307 of the first user terminal 3. At least one of the processing at steps S401 to S402 and steps S501 to S502 described with reference to Figs. 12 and 13 is executed.

In addition, each of the above-described embodiment and modification is merely an example of embodying the present invention, and the technical scope of the present invention should not be interpreted in a limited manner. That is, the present invention can be implemented in various forms without departing from the gist or main features thereof.

### Reference Signs List

1 Information processing system
2 Server (information processing device)
200A Communication IF
200B Storage device
200C CPU
201 Receiver
202 Transmitter
203 Storage device controller
3 First user terminal (information processing terminal)
300A Communication IF
300B Storage device
300C Input device
300D Display device
300E CPU
300F Microphone
300G Speaker
301 Receiver
302 Transmitter
303 Storage device controller
304 Input acceptor (acceptor)
305 Display device controller
306 Acquirer (first to third acquirers)
307 Contributor
308 Generator
309 Converter
310 Recognizer
311 Reporter
312 Register
4 Second user terminal
400A Communication IF
400B Storage device
400C Input device
400D Display device (LED)
400E CPU
400F Microphone
400G Speaker
400H GPS sensor
401 Receiver
402 Transmitter
403 Storage device controller
404 Input acceptor
405 Display device controller
5 Network

## Claims

1. An information processing terminal comprising:
a first acquirer that acquires first designation information for designating voice data to be contributed from one or more voice data; and
a contributor that contributes the voice data designated by the first designation information acquired by the first acquirer.

2. The information processing terminal according to claim 1, comprising:
a generator that generates reproduction data to be reproduced by combining the voice data designated by the first designation information acquired by the first acquirer with at least one of image data and moving image data, wherein
the contributor
contributes the reproduction data generated by the generator.

3. The information processing terminal according to claim 2, comprising:
a second acquirer that acquires second designation information for designating at least one of the image data and the moving image data to be contributed, wherein
the generator
generates the reproduction data to be reproduced by combining the voice data designated by the first designation information acquired by the first acquirer and at least one of the image data and the moving image data designated by the second designation information acquired by the second acquirer.

4. The information processing terminal according to claim 1, comprising:
a converter that converts the voice data acquired by the first acquirer to character data, wherein
the first acquirer
acquires the first designation information on a basis of the character data converted by the converter.

5. The information processing terminal according to claim 4, wherein
the first acquirer
acquires information for designating the character data in units of sentences or in units of voice data.

6. The information processing terminal according to claim 4, wherein
the first acquirer
acquires information for designating the character data in units of two or more sentences or in units of voice data.

7. The information processing terminal according to claim 4, wherein
the contributor
contributes character data together with the voice data of which contribution is designated.

8. The information processing terminal according to claim 7, wherein
the character data is
character data obtained by converting the voice data of which contribution is designated.

9. The information processing terminal according to claim 1, comprising:
a recognizer that recognizes a speaker of the voice data, wherein
the contributor
contributes information of a speaker of the voice data together with the voice data of which contribution is designated.

10. The information processing terminal according to claim 1, wherein
the contributor
refers to a dictionary in which a word of which contribution is forbidden is registered, and restricts contribution of voice data including the word registered in the dictionary.

11. The information processing terminal according to claim 1, comprising:
a reporter that reports presence of voice data including a word registered in the dictionary.

12. The information processing terminal according to claim 11, comprising:
an acceptor that accepts selection as to whether or not contribution of the voice data reported by the reporter is allowed, wherein
the contributor
contributes the voice data reported by the reporter on a basis of the selection as to whether or not the contribution is allowed accepted by the acceptor.

13. The information processing terminal according to claim 10, comprising:
a third acquirer that acquires a word of which contribution is forbidden; and
a register that registers the word acquired by the third acquirer in the dictionary.

14. An information processing method comprising:
a step of acquiring designation information for designating voice data to be contributed from one or more voice data by an acquirer; and
a step of contributing the voice data designated by the designation information acquired by the acquirer by a contributor.

15. An information processing program that allows
a computer to serve as:
an acquirer that acquires designation information for designating voice data to be contributed from one or more voice data; and
a contributor that contributes the voice data designated by the designation information acquired by the acquirer.
